# EUROPEAN PATENT APPLICATION

(11) **EP 4 481 561 A1**
(43) Date of publication of application: **25.12.2024**
(21) Application number: 23825839.6
(22) Date of filing: 09.03.2023
(51) Int. Cl.: G06F 9/4401

(54) **SYSTEM SWITCHING METHOD, AND TERMINAL DEVICE AND STORAGE MEDIUM**

(30) Priority: 23.06.2022 CN 202210716955
(71) Applicant: ZTE Corporation, Shenzhen, Guangdong 518057 (CN)
(72) Inventor: CAO, Gang, Shenzhen, Guangdong 518057 (CN)
(74) Representative: Savi, Massimiliano
(86) International application number: PCT/CN2023/080620
(87) International publication number: WO 2023/246181

(57) **Abstract**

Disclosed in the present application are a system switching method, and a terminal device and a storage medium. The system switching method is applied to a terminal device, wherein the terminal device comprises a first system and a second system. The system switching method comprises: a terminal device monitoring the startup progress of a second system (S210); if display initialization completion information of the second system is received, and received service subsystem registration completion information of the second system meets a service subsystem registration requirement in a preset white list, controlling a first system to enter a desktop (S220); and setting a system switching key in the desktop of the first system to be in an available state (S230).

## Description

### CROSS-REFERENCE TO RELATED APPLICATION

This application is based on and claims the priority of Chinese patent application No. 202210716955.1 filed on June 23, 2022, the disclosure of which is incorporated herein by reference in its entirety.

### TECHNICAL FIELD

The present disclosure relates to the technical field of terminal operating systems and, in particular, to a method for system switching, a terminal device, and a storage medium.

### BACKGROUND

With the wide application of dual operating systems in the secure terminal market, the key technology of dual operating systems has gradually become the focus of attention in the industry. Specifically, dual system booting and switching techniques are an important part of the core technology in the research of dual operating systems. During the booting of dual operating systems (e.g., dual Android systems), considering the internal scheduling of the system CPU, it is often necessary to boot in an earlier time, one default system that is to be displayed first, and to boot the other system in a later time. Thus, after the first system is booted, the user has to wait for a long period of time if he/she wants to switch to another system right away and, in particular, if the second system has more configurations, the booting time will be longer and hence the waiting time for switching will be even longer, which results in a poor user experience.

In some cases, if a user wants to quickly switch to another operating system after a terminal device with dual operating systems has completed the booting into one of the operating systems, he or she can directly switch to the second system after the first system has finished booting without waiting for the second system to finish booting. However, such an approach may cause anomalies in the second system and in the functions of the terminal device itself related to dual system switching handling. For example, it may cause the second system to display a black screen, or other subsystems to have functional anomalies during system switching handling, or the like, and these functional anomalies will take more time to correct and may cause the system to take a longer time to complete the switching process, thus resulting in a lower reliability and efficiency of the switching system. In the case of rebooting a terminal device with dual systems, it is important to realize fast and efficient switching between the dual systems to improve the user experience.

### SUMMARY

Provided are a method for system switching, a terminal device and a storage medium in some embodiments of the present disclosure.

In accordance with a first aspect of the present disclosure, a method for system switching is provided, which is applied to a terminal device including a first system and a second system. The method includes: monitoring a booting progress of the second system; controlling the first system to enter a desktop in response to both a reception of a display initialization completion message of the second system and a satisfaction of a received service subsystem registration completion message of the second system with a service subsystem registration requirement in a preset whitelist; and setting a system switching button in the desktop of the first system to an available state.

In accordance with a second aspect of the present disclosure, a terminal device is provided. The terminal device includes: a memory, a processor, and a computer program stored in the memory and executable by the processor, where the computer program, when executed by the processor, causes the processor to implement the method of the first aspect.

In accordance with a third aspect of the present disclosure, a computer-readable storage medium is provided. The computer-readable storage medium storing computer-executable instructions for performing the method described above.

### BRIEF DESCRIPTION OF DRAWINGS

FIG. 1 is a schematic diagram of functional modules of dual systems that a terminal device has according to an embodiment of the present disclosure;
FIG. 2 is a flowchart of a method for system switching according to an embodiment of the present disclosure;
FIG. 3 is a flowchart of operation S210 in FIG. 2;
FIG. 4 is a flowchart of operation S220 in FIG. 2;
FIG. 5 is a schematic diagram of a terminal device according to an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the embodiments described herein are only intended to explain the present disclosure, and are not intended to limit the present disclosure.

It is to be noted that although a division of functional modules is shown in a schematic diagram of a system and a logical order is shown in a flowchart, the operations shown or described may be executed, in some cases, in a different module division from that of the system or in a different order from that in the flowchart. The terms such as "first" and "second" in the description, claims and above-mentioned drawings are intended to distinguish between similar objects and are not necessarily to describe a specific order or sequence.

Provided are a method for system switching, a terminal device, and a computer-readable storage medium in some embodiments of the present disclosure. The terminal device monitors a booting progress of the second system, and then controls the first system to enter a desktop in response to receiving a display initialization completion message of the second system and in response to received service subsystem registration completion messages of the second system satisfying a service subsystem registration requirement in a preset whitelist, and then sets a system switching button in the desktop of the first system to an available state. As a result, it is possible to quickly and efficiently switch from the first system to the second system when starting the terminal device without waiting for a time delay and under the condition of ensuring normal functioning of the dual systems, thereby improving the user experience.

The embodiments of the present disclosure will be further explained below with reference to the accompanying drawings.

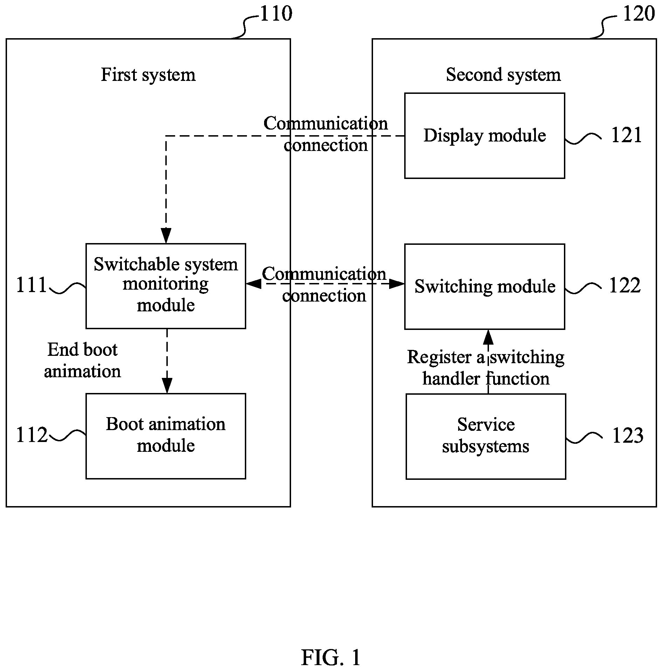

FIG. 1 is a schematic diagram of functional modules of dual systems that a terminal device has according to an embodiment of the present disclosure. The terminal device has dual operating systems, namely, a first system 110 and a second system 120. In the example shown in FIG. 1, the first system 110 includes a switchable system monitoring module 111 and a boot animation module 112, and the second system 120 includes a display module 121, a switching module 122, and service subsystems 123. The switchable system monitoring module 111 in the first system 110 is communicatively connected respectively to the boot animation module 112 as well as the switching module 122 and the display module 121 in the second system 120.

In the first system 110, the boot animation module 112 is configured to play a boot animation during the initiation of the terminal device, so as to prompt the user that the first system 110 is in the process of being booted; and it is further configured to end the boot animation under the control of the switchable system monitoring module 111, so as to prompt the user that the booting of the first system 110 has been completed.

The first system 110 further includes a file system (not shown in FIG. 1) with a preset whitelist recorded therein. The preset whitelist records at least one service subsystem 123 of the second system 120 that needs to perform switching handler function registration processing. The switchable system monitoring module 111 in the first system 110 is used to monitor a booting progress of the second system 120 and to control, in response to receiving a display initialization completion message of the second system 120. The switchable system monitoring module 111 is further configured to control, in response to received service subsystem registration completion messages of the second system 120 satisfying a service subsystem registration requirement in a preset whitelist, the boot animation module 112 to stop the boot animation of the first system 110 and to control the first system 110 to enter the desktop.

In an embodiment of the present disclosure, the switchable system monitoring module 111 receives the display initialization completion message of the second system 120 in response to the second system 120 completing display initialization processing. Then, the terminal device controls the second system 120 to start the service subsystems 123 and performs the switching handler function registration processing on the service subsystems 123. The switchable system monitoring module 111 receives one service subsystem registration completion message sent by the second system 120 in response to each of the service subsystems 123 completing the switching handler function registration processing. The switchable system monitoring module 111 performs comparative detection processing according to the received service subsystem registration completion messages of the second system with the preset whitelist; and determines, in response to detecting that the service subsystems recorded in the preset whitelist have all completed the registration, that the received service subsystem registration completion messages of the second system satisfy the service subsystem registration requirement in the preset whitelist. Specifically, the display initialization processing indicates that the display module 121 in the second system 120 performs initialization processing, and the completion of the module initialization of the display module 121 can ensure that a black screen failure does not occur when switching from the first system 110 to the second system 120. The display initialization completion message indicates that the display module 121 in the second system 120 has completed the display initialization processing. And one service subsystem registration completion message indicates that one corresponding service subsystem 123 of the second system 120 has completed the switching handler function registration processing.

In an embodiment of the present disclosure, during the monitoring of the booting progress of the second system 120, the switchable system monitoring module 111 receives a first cross-system notification message sent by the display module 121 of the second system 120 and a second cross-system notification message sent by the switching module 122 of the second system 120.The switchable system monitoring module 111 obtains the display initialization completion message via the first cross-system notification message, and obtains the service subsystem registration completion messages regarding the service subsystems 123 via the second cross-system notification message. It can be understood that the sending and receiving of the cross-system notification messages can be realized via a local SOCKET, which is not specifically limited in the present disclosure.

In some embodiments, after the second system 120 is booted, the display module 121 in the second system 120 begins initialization processing. Upon the completion of the display initialization processing, the display module 121 sends the first cross-system notification message to the switchable system monitoring module 111. The purpose of the display module 121 of the second system 120 performing the display initialization processing is to ensure that, when switching from the first system 110 to the second system 120, the second system 120 can be displayed normally without a black screen failure.

It can be understood that the switchable system monitoring module 111 may be provided in the first system 110 or in a controller of the terminal device, which is not specifically limited in the present disclosure. In addition, in some embodiments the display module 121 in the second system 120 may be a *SurfaceFlinger* module of the Android system, and the present disclosure does not limit the implementation of the display module 121.

In some embodiments, when the service subsystem 123 is started, a switching handler function is registered with the switching module 122. Each time the switching module 122 detects that one service subsystem 123 has completed the switching handler function registration processing, it sends one second cross-system notification message to the switchable system monitoring module 111 until all of the service subsystems 123 recorded in the preset whitelist have completed the switching handler function registration processing. The switching module 122 sends at least one second cross-system notification message to the switchable system monitoring module 111. The switching module 122 allows the switchable system monitoring module 111 to obtain the switching handler function registration situation of the service subsystems 123 by means of the second cross-system notification message.

It can be understood that the service subsystems 123 in the second system 120 include various service modules such as Bluetooth module, Wi-Fi module, recorder, NFC module, camera, and others that need to operate terminal hardware and peripherals, and these service subsystems 123 need to perform some operation handling, such as releasing and opening of devices, before and after system switching. The present disclosure does not impose any specific limitation on the number and types of the service subsystems 123 that need to perform the switching handler function registration processing, which may be determined based on the service subsystems 123 included in the actual second system 120.

It can be understood that when there is also another switching module provided in the first system 110, switching from the second system 120 to the first system 110 is performed via the switching module in the first system 110. In addition, a switching system may be provided in the terminal device independently of the first system 110 and the second system 120, which controls the mutual switching between the first system 110 and the second system 120.

It can be understood that the module functions in the embodiments of the present disclosure can also be realized through the control of a master control chip of the terminal device, but the logical relationship involved in realizing the corresponding functions by the master control chip is the same as that of the above-mentioned modules, so that this cannot be regarded as a difference from the embodiments of the present disclosure, and that any hardware functional structure involving the establishment of the same logical relationship as the embodiments of the present disclosure is within the scope of protection of the present disclosure.

According to an embodiment of the present disclosure, a terminal device is provided. The terminal device includes the first system 110 pre-records therein a preset whitelist, and the second system 120. When the user starts the terminal device, the first system 110 is booted first and, in the booting process, the boot animation module 112 plays a boot animation while the switchable system monitoring module 111 is started. The second system 120 is booted after a preset interval time. During the booting process of the second system 120, the display module 121 is started for display initialization processing, and the service subsystems 123 are then started for switching handler function registration processing. The switchable system monitoring module 111 then monitors the booting progress of the second system 120 and controls, in response to monitoring that the display module 121 in the second system 120 has completed the display initialization processing and in response to all of the service subsystems 123 of the second system 120 that are recorded in the preset whitelist having completed the switching handler function registration processing, the boot animation module 112 to stop playing the boot animation, and enters the desktop of the first system 110. Afterwards, the switchable system monitoring module 111 sends a switching handling ready state notification to the switching module 122 of the second system 120 to notify the switching module 122 that the second system 120 has completed the basic booting process and that switching handling can be performed between the first system 110 and the second system 120; and to cause the switching module 122 to enter the switching handling ready state. Then the user can click/ tap on the system switching button on the desktop to trigger the system switching button to generate a system switching command. The switching module 122 in the switching handling ready state, upon receiving the system switching command, performs system switching handling to switch from the first system 110 to the second system 120 without waiting for a time delay. In some embodiments, in a mobile phone terminal device with dual Android systems, one system (such as the work system) is booted first, and then the other system (such as the life system) is booted later. After the work system is booted, when the user needs to quickly switch to the life system, there may be a situation of a long switching time delay or of abnormalities in the functions related to dual system switching handling, which results in a poor user experience. In contrast, by utilizing the terminal device with dual systems according to an embodiment of the present disclosure, it is possible to quickly and efficiently switch from the first system 110 to the second system 120 when starting the terminal device without waiting for a time delay and under the condition of ensuring normal functioning of the dual systems, thereby improving the user experience.

It is worth noting that the switchable system monitoring module 111 in the first system 110 may be a monitor and can monitor the starting state of the core components (e.g., the display module 121 and the service subsystems 123) of the second system 120 in real time. The switchable system monitoring module 111 mainly monitors the progress of the starting of the display module 121 of the second system 120 and of the registration of the switching handler function by each of the service subsystems 123, and acquires the booting progress state of the second system 120 promptly via the first cross-system notification message and the second cross-system notification message and, in response to receiving the display initialization completion message of the second system via the first cross-system notification message and the service subsystem registration completion message of the second system received via the second cross-system notification message satisfying the service subsystem registration requirement in the preset whitelist, ends the boot animation immediately and controls the first system to enter the desktop and sets the system switching button in the desktop of the first system to an available state. This does not affect the boot time of the terminal device having dual systems itself, and makes it possible to switch to the second system 120 without waiting for a time delay, and it does not affect the second system nor the functions of the terminal device itself related to dual system switching handling.

It can be understood that the schematic function modules of the system and the application scenarios described in the embodiments of the present disclosure are for more clearly describing the technical schemes of the embodiments of the present disclosure, and do not constitute a limitation on the technical schemes provided by the embodiments of the present disclosure. Those of ordinary skill in the art may understand that, with evolution of the function modules of the system and emergence of new application scenarios, the technical schemes provided by the embodiments of the present disclosure are also applicable to similar technical problems. Those of ordinary skill in the art may understand that the function modules of the system shown in FIG. 1 do not constitute a limitation on the embodiments of the present disclosure, and the first system 110 and the second system 120 may include more or fewer modules than illustrated, or some of the modules may be combined, or a different arrangement of the modules may be used.

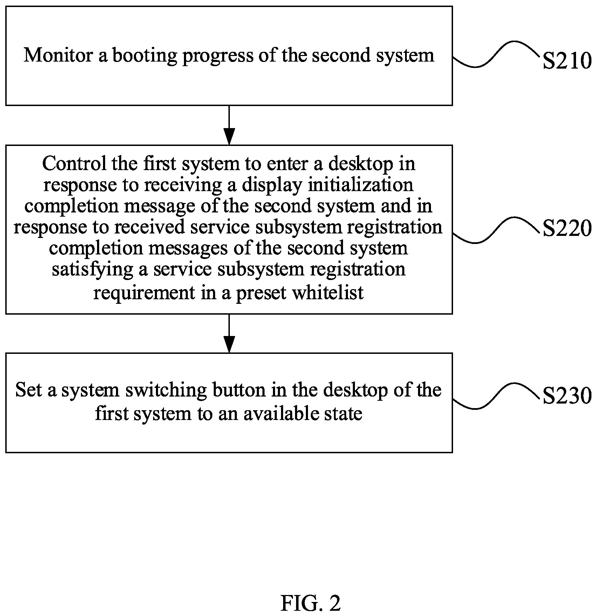

Referring to FIG. 2. FIG. 2 is a flowchart of a method for system switching according to an embodiment of the present disclosure, where this method may be applied in a terminal device with dual systems as shown in FIG. 1. The method includes, but is not limited to, operations S210, S220, and S230.

At S210, a booting progress of the second system is monitored.

In this operation, after the terminal device is started, the terminal device monitors the booting progress of the second system. In some embodiments, the terminal device monitors the progress of the display initialization processing of the second system and the progress of the registration of the service subsystems of the second system that are recorded in the preset whitelist. In the process of the terminal device monitoring the booting progress of the second system, the terminal device receives a display initialization completion message and service subsystem registration completion messages of the second system, where the service subsystem registration completion messages indicate the completion of the registration of the service subsystems of the second system that are recorded in the preset whitelist. Among them, the display initialization processing indicates that the display module in the second system performs initialization processing. The display initialization completion message indicates the completion of the display initialization processing by the second system. The completion of the display initialization processing for the second system can ensure that, when switching to the second system, the main interface of the second system can be displayed normally without any black screen failure. A service subsystem registration completion message indicates the completion of the registration processing of a corresponding service subsystem in the second system, which registration processing refers to the switching handler function registration processing. The completion of the registration of the switching handler function by the service subsystems in the second system can ensure that each shared device, i.e., the device that is shared by the first system and the second system, can be released, and opened in a timely manner when the system switching processing is carried out, so as to ensure the normal realization of the various service subsystem functions.

In an embodiment of the present disclosure, when the terminal device is powered on, the terminal device first boots the first system and starts the boot animation, and then boots the second system after a preset interval time. In practice, the first system and the second system will share some modules, then if the first system and the second system are booted at the same time, a conflict may occur, which prolongs the boot time. Hence, in the embodiments of the present disclosure, a preset interval time needs to be set, and the first system is booted first, and the second system is booted after the preset interval time, so as to reduce the probability of a conflict between the first system and the second system when the terminal device has just been started. In some embodiments, the preset interval time may be set to be 6 seconds, or the preset interval time may be set according to the complexity of the actual dual systems, which is not specifically limited in the present disclosure.

At S220, the first system is controlled to enter a desktop in response to receiving a display initialization completion message of the second system and in response to received service subsystem registration completion messages of the second system satisfying a service subsystem registration requirement in a preset whitelist.

In this operation, the terminal device controls the first system to enter the desktop in response to receiving the display initialization completion message of the second system and in response to the received service subsystem registration completion messages of the second system satisfying the service subsystem registration requirement in the preset whitelist. The terminal device controlling the first system to enter the desktop includes: stopping the boot animation of the first system and controlling the first system to enter the desktop. The terminal device receiving the initialization completion message and the received service subsystem registration completion messages of the second system satisfying the service subsystem registration requirement in the preset whitelist indicates that the second system has completed the basic booting process and switching can be performed from the first system to the second system. It can be understood that when the first system is booted, the boot animation is played along with the booting. In some embodiments, in response to monitoring that the display module in the second system has completed the display initialization processing and in response to all of the service subsystems of the second system that are recorded in the preset whitelist having completed the switching handler function registration processing, the playing of the boot animation is stopped and the desktop of the first system is entered.

At S230, a system switching button in the desktop of the first system is set to an available state.

In this operation, the terminal device sets the system switching button in the desktop of the first system to the available state. In some embodiments, the terminal device controls a switching module to enter a switching handling ready state and sets the system switching button in the desktop of the first system to the available state.

In an embodiment of the present disclosure, the terminal device controls the switching module to enter the switching handling ready state and sets the system switching button in the desktop to the available state in response to receiving the display initialization completion message of the second system and in response to the received service subsystem registration completion messages of the second system satisfying the service subsystem registration requirement in the preset whitelist. In some embodiments, the terminal device sends a switching handling ready state notification to the switching module of the second system to notify the switching module that the second system has completed the basic booting process and that switching handling can be performed between the first system and the second system; and to cause the switching module to enter the switching handling ready state.

In one embodiment of the present disclosure, after setting a system switching button in the desktop of the first system to an available state, the method further includes: receiving a system switching command generated by the system switching button being triggered; and switching from the first system to the second system according to the system switching command. In some embodiments, the terminal device performs system switching handling to switch from the first system to the second system via the switching module according to the system switching command.

It can be understood that in response to the system switching button being in the available state, the terminal device receives from the desktop a system switching command generated by the system switching button being triggered. The desktop of the terminal device is provided with a system switching button, and after the system switching button is set to the available state, the user may click/ tap on the button to trigger the generation of the system switching command, i.e., the user may select on his or her own the timing of switching from the first system to the second system. Then, according to the system switching command, the switching module in the terminal device switches from the first system to the second system without waiting for a time delay.

In some embodiments of the present disclosure, by adopting the method for system switching including operations S210 to S230 as described above, it is possible to enable the terminal device to monitor the booting progress of the second system during the booting of the terminal device having dual systems, and then control the first system to enter the desktop in response to receiving the display initialization completion message of the second system and in response to the received service subsystem registration completion messages of the second system satisfying the service subsystem registration requirement in the preset whitelist, and then set the system switching button in the desktop of the first system to the available state, so that the user can easily trigger the system switching button for system switching, and the user does not need to wait for a time delay during the switching process. As a result, in this embodiment, it is possible to quickly and efficiently switch from the first system to the second system when starting the terminal device without waiting for a time delay and under the condition of ensuring normal functioning of the dual systems, thereby improving the user experience.

It is worth noting that when the terminal device monitors the basic booting progress of the second system in real time, the progress of the starting of the display module of the second system and of the registration of the switching handler function by the service subsystems recorded in the preset whitelist are mainly controlled. The boot animation is terminated immediately when the basic booting process of the second system is completed. This does not affect the boot time of the terminal device having dual systems itself, and makes it possible to switch to the second system without waiting for a switching time delay, and it does not affect the second system nor the functions of the terminal device itself related to dual system switching handling. It can be understood that the completion of the basic booting process by the second system only means that the display module initialization is completed and the service subsystems in the preset whitelist have all completed the switching handler function registration processing, and the second system has not been fully booted. Therefore, compared to the manner in which system switching is performed only after the second system is fully booted, embodiments of the present disclosure are capable of arriving at the system-switchable timing more quickly when the terminal device has just been started or restarted for the user to perform the system switching operation, thereby improving the user experience.

In an embodiment of the present disclosure, in the process of the terminal device monitoring the booting progress of the second system, the terminal device receives a first cross-system notification message and a second cross-system notification message sent by the second system, and obtains the display initialization completion message of the second system via the first cross-system notification message and later obtains the service subsystem registration completion message regarding the service subsystem via the second cross-system notification message. Among them, one service subsystem registration completion message indicates the completion of registration of a corresponding one of the service subsystems of the second system that are recorded in the preset whitelist. The display initialization completion message indicates the completion of display initialization processing by the second system. The terminal device monitors the basic booting process of the second system in real time, and mainly monitors the progress of the display initialization processing of the second system and of the switching handler function registration processing of the service subsystems of the second system that are recorded in the preset whitelist. This facilitates immediate ending of the boot animation when the second system completes the display initialization processing and the service subsystems in the preset whitelist complete the switching handler function registration processing, which ensures that the boot time of the terminal device itself will not be too long.

In an embodiment of the present disclosure, the preset whitelist records at least one service subsystem of the second system that needs to perform switching handler function registration processing. The terminal device may acquire from the preset whitelist the number and the names of the service subsystems in the second system that need to perform switching handler function registration processing. It can be understood that when a terminal device supports running both two operating systems, such as two Android systems, it is possible to switch from one system to the other when in use, and the two systems achieve isolation at the level of the file system, the network, and the application. The preset whitelist may be recorded in the file system of the first system and then read from the file system when the preset whitelist needs to be used.

In an embodiment of the present disclosure, prior to operation S210, the preset whitelist may be pre-entered in the terminal device by manual operation or, alternatively, the preset whitelist generated and sent by the second system may be received and recorded, where the preset whitelist records at least one service subsystem of the second system that needs to perform switching handler function registration processing. It can be understood that the preset whitelist can be updated. Therefore, the present disclosure does not impose any specific limitations on the manner of generating, acquiring, and updating the preset whitelist.

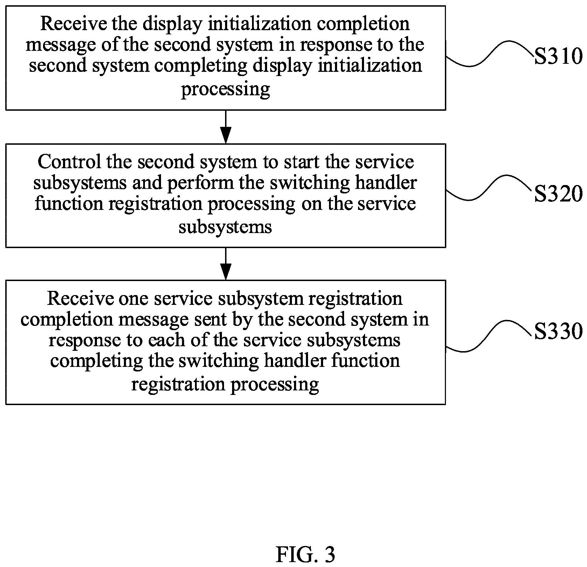

Referring to FIG. 3. FIG. 3 is a flowchart of the method of operation S210 in FIG. 2. At S210, a booting progress of the second system is monitored, including but not limited to operation S 310, operation S 320, and operation S 330.

At S310, the display initialization completion message of the second system is received in response to the second system completing display initialization processing.

In this operation, after the second system is booted, the display initialization processing is performed, and the terminal device receives the display initialization completion message of the second system in response to the second system completing the display initialization processing. In some embodiments, the display module in the second system performs the display initialization processing, and when the display initialization processing is completed, the display module sends the display initialization completion message to the terminal device.

At S320, the second system is controlled to start the service subsystem(s) and the switching handler function registration processing is performed on the service subsystem(s).

In this operation, the terminal device controls the second system to start the service subsystems, and performs the switching handler function registration processing on the service subsystems. In some embodiments, when the service subsystem is started, a switching handler function is registered with the switching module. The service subsystems include, but are not limited to, various service modules such as Bluetooth module, Wi-Fi module, recorder, NFC module, camera, and others that need to operate terminal hardware and peripherals.

At S330, one service subsystem registration completion message sent by the second system is received in response to each of the service subsystems completing the switching handler function registration processing.

In this operation, the terminal device receives one service subsystem registration completion message sent by the second system in response to each of the service subsystems completing the switching handler function registration processing. The second system then sends at least one service subsystem registration completion message to the terminal device. In one embodiment of the present disclosure, the sending and receiving of the cross-system notification messages can be realized via a local SOCKET. The present disclosure does not impose any specific limitations on the manner of realizing the sending and receiving of the cross-system notification messages. In the embodiments of the present disclosure, by means of operations S310 to S330, the terminal device acquires the progress of the display initialization processing in the second system and of the switching handler function registration processing of the service subsystems recorded in the preset whitelist.

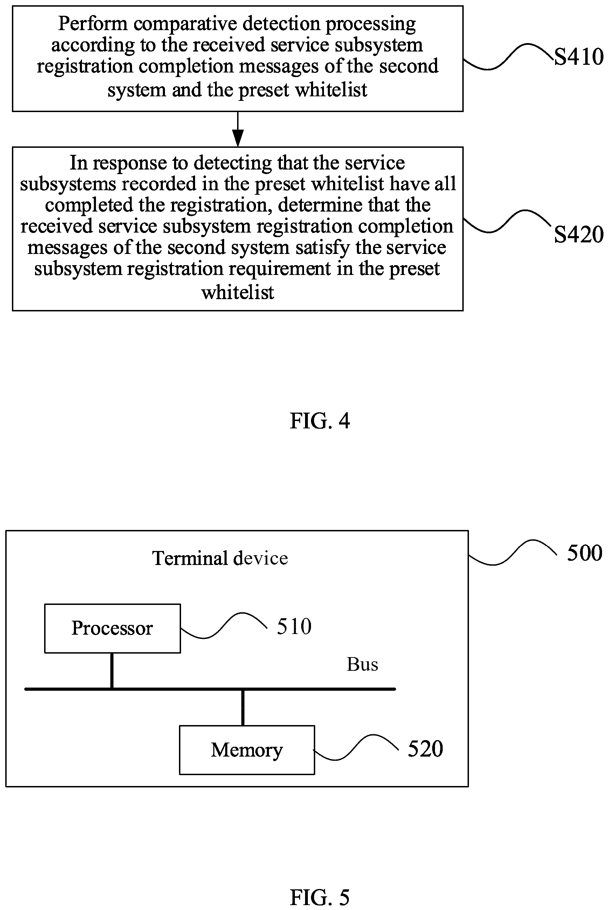

Referring to FIG. 4. FIG. 4 is a flowchart of the method of operation S220 in FIG. 2. Operation S220 includes, but is not limited to, operation S410 and operation S420.

At S410, comparative detection processing is performed with the preset whitelist according to the received service subsystem registration completion messages of the second system.

At S420, in response to detecting that the service subsystems recorded in the preset whitelist have all completed the registration, it is determined that the received service subsystem registration completion messages of the second system satisfy the service subsystem registration requirement in the preset whitelist.

In the embodiments of the present disclosure, by adopting the method for system switching including operations S410 to S420 described above, the terminal device performs comparative detection processing according to the received service subsystem registration completion messages of the second system and the preset whitelist, and in response to the terminal device detecting that the service subsystems recorded in the preset whitelist have all completed the registration, it determines that the received service subsystem registration completion messages of the second system satisfy the service subsystem registration requirement in the preset whitelist. The service subsystem registration completion message includes information such as the name of the service subsystem that has completed switching handler function registration processing. Each time one of the service subsystems in the second system completes switching handler function registration processing, the terminal device receives one service subsystem registration completion message. It can be understood that the number of service subsystem registration completion messages received by the terminal device is at least one. The terminal device then reads the preset whitelist and performs comparative detection processing according to the preset whitelist and the service subsystem registration completion messages. Each service subsystem registration completion message corresponds to one service subsystem. The comparative detection processing is to perform a comparative check between the preset whitelist and the service subsystem registration completion messages, and to check whether the service subsystem registration completion messages corresponding to the service subsystems in the preset whitelist have all been received. In response to the terminal device detecting that the service subsystem registration completion messages corresponding to the service subsystems in the preset whitelist have all received, i.e., in response to the terminal device detecting that the service subsystems recorded in the preset whitelist have all completed the switching handler function registration processing, it is determined that the received service subsystem registration completion messages of the second system satisfy the service subsystem registration requirement in the preset whitelist. The terminal device monitors the progress of the switching handler function registration processing performed by the service subsystems in the preset whitelist, and will not allow the second system to enter the switchable state until the service subsystems in the preset whitelist have all completed the registration of the switching handler function, and this is to ensure that the shared devices can be released and opened in a timely manner during the process of switching from the first system to the second system, so as to ensure that the service subsystems function normally.

FIG. 5 is a schematic diagram of a terminal device according to an embodiment of the present disclosure. The terminal device 500 of the embodiment of the present disclosure includes at least one processor 510 and memory 520. In FIG. 5, one processor 510 and one memory 520 are shown as an example. The processor 510 and the memory 520 may be connected by a bus or in other ways. In FIG. 5, the connection is realized by a bus for example.

As a non-transitory computer-readable storage medium, the memory 520 may be configured to store a non-transitory software program and a non-transitory computer-executable program. In addition, the memory 520 may include a high-speed random access memory and a non-transitory memory, for example, at least one magnetic disk storage device, a flash memory device, or another non-transitory solid-state storage device. In some implementations, the memory 520 may include memories 520 remotely located with respect to the processor 510, and these remote memories 520 may be connected to the terminal device 500 via a network. Examples of the above-mentioned network include, but are not limited to, the Internet, an intranet, a local area network, a mobile communications network, and a combination thereof.

It can be understood by those of ordinary skill in the art that the device structure shown in FIG. 5 does not constitute a limitation to the terminal device 500, and more or fewer components, or a combination of certain components, or a different component arrangement is possible.

Non-transient software programs and instructions required to realize the method for system switching applied to the terminal device 500 in the above embodiments are stored in the memory 520, and when executed by the processor 510, implement the method for system switching applied to the terminal device 500 in the above embodiments, for example, execute the above-described method operations S210 to S230 in FIG. 2, S310 to S330 in FIG. 3, and S410 to S420 in FIG. 4.

The apparatus embodiments described above are only for illustration. The units described as separate components may or may not be physically separated, that is, they may be located at one place or distributed to multiple network units. Some or all of the modules can be selected according to actual needs to achieve the purpose of the scheme of this embodiment.

Furthermore, an embodiment of the present disclosure also provides a computer-readable storage medium which stores computer-executable instructions which, when executed by one or more processors, for example, the processor 510 shown in FIG. 5, can cause the one or more processors 510 to execute the control method in the above method embodiment, for example, execute the above-described method operations S210 to S230 in FIG. 2, S310 to S330 in FIG. 3, and S410 to S420 in FIG. 4.

An embodiment of the present disclosure includes: the terminal device monitors a booting progress of the second system; controls the first system to enter a desktop in response to receiving a display initialization completion message of the second system and in response to received service subsystem registration completion messages of the second system satisfying a service subsystem registration requirement in a preset whitelist; and sets a system switching button in the desktop of the first system to an available state. According to the scheme of embodiments of the present disclosure, the terminal device monitors the booting progress of the second system, and then controls the first system to enter the desktop in response to receiving the display initialization completion message of the second system and in response to the received service subsystem registration completion messages of the second system satisfying the service subsystem registration requirement in the preset whitelist, and then sets the system switching button in the desktop of the first system to the available state. That is, in the scheme of embodiments of the present disclosure, it is possible to quickly and efficiently switch from the first system to the second system when starting the terminal device without waiting for a time delay and under the condition of ensuring normal functioning of the dual systems, thereby improving the user experience.

It can be understood by those of ordinary skill in the art that all or some of the operations of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to a random access memory (RAM), a read-only memory (ROM), an electrically erasable programmable read-only memory (EEPROM), a flash memory or other memory techniques, a compact disc read-only memory (CD-ROM), a digital versatile disk (DVD) or other optical disk storage, a magnetic cassette, a magnetic tape, magnetic disk storage or other magnetic storage devices, or any other medium that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

## Claims

1. A method for system switching, which is applied to a terminal device comprising a first system and a second system, the method comprising:
monitoring a booting progress of the second system;
controlling the first system to enter a desktop in response to both a reception of a display initialization completion message of the second system and a satisfaction of a received service subsystem registration completion message of the second system with a service subsystem registration requirement in a preset whitelist; and
setting a system switching button in the desktop of the first system to an available state.

2. The method of claim 1, wherein the monitoring the booting progress of the second system comprises:
receiving the display initialization completion message of the second system in response to a completion of display initialization processing by the second system;
controlling the second system to start at least one of a plurality of service subsystems and performing switching handler function registration processing on each of the at least one of a plurality of service subsystems; and
receiving a plurality of service subsystem registration completion messages each sent by the second system in response to a completion of the switching handler function registration processing by a respective one of the at least one of the service subsystems; wherein the received service subsystem registration completion message is one of the plurality of service subsystem registration completion messages.

3. The method of claim 2, wherein a determination of the satisfaction of the received service subsystem registration completion message of the second system with the service subsystem registration requirement in the preset whitelist comprises:
performing comparative detection processing with the preset whitelist according to the received service subsystem registration completion messages of the second system; and
determining, the satisfaction of the received service subsystem registration completion messages of the second system with the service subsystem registration requirement in the preset whitelist, in response to a completion of registration by each of the service subsystems recorded in the preset whitelist.

4. The method of claim 1, wherein prior to monitoring the booting progress of the second system, the method further comprises:
booting the first system and starting a boot animation, and booting the second system after a preset interval time is passed.

5. The method of claim 4, wherein controlling the first system to enter the desktop comprises:
stopping the boot animation of the first system and controlling the first system to enter the desktop.

6. The method of claim 1, wherein prior to monitoring the booting progress of the second system, the method further comprises:
pre-entering the preset whitelist;
or receiving and recording the preset whitelist generated and sent by the second system,
wherein the preset whitelist records at least one of the plurality of service subsystems of the second system, wherein, the at least one of the plurality of service subsystems is subjected to the switching handler function registration processing subsequently.

7. The method of claim 1, wherein setting the system switching button in the desktop of the first system to the available state comprises:
controlling a switching module to enter a switching handling ready state and setting the system switching button in the desktop of the first system to the available state.

8. The method of claim 1, wherein after setting the system switching button in the desktop of the first system to the available state, the method further comprises:
receiving a system switching command generated by a trigger on the system switching button; and
switching from the first system to the second system according to the system switching command.

9. A terminal device, comprising: a memory, a processor, and a computer program stored in the memory and executable by the processor, wherein the computer program, when executed by the processor, causes the processor to carry out the method of any one of claims 1 to 8.

10. A computer-readable storage medium storing computer-executable instructions which, when executed by a processor of a computer, causes the processor to carry out the method of any one of claims 1 to 8.
